# EUROPEAN PATENT APPLICATION

(11) **EP 1 958 764 A1**
(43) Date of publication of application: **20.08.2008**
(21) Application number: 08001218.0
(22) Date of filing: 23.01.2008
(51) Int. Cl.: B32B 17/10, C03C 27/12, G02B 27/01, B60J 1/00

(54) **Laminated glass for vehicle**

(30) Priority: 24.01.2007 JP 2007013803
(71) Applicant: Asahi Glass Company, Limited, Chiyoda-ku Tokyo 100-8405 (JP)
(72) Inventor: Masaki, Yuuji, Tokyo 100-8405 (JP); Kurihara, Kazuyuki, Tokyo 100-8405 (JP); Shibata, Shigehito, Tokyo 100-8405 (JP)
(74) Representative: Müller-Boré & Partner Patentanwälte

(57) **Abstract**

A laminated glass is provided, which can provide appropriate acoustic preventing performance for each portion of the laminated glass according to the positional relationship between the laminated glass and a passenger, and which employs an interlayer having a functionality.

The interlayer has at least one resin layer having a functionality; the thickness of the interlayer at the upper side is from 1.5 to 3 times of the thickness at the lower side; the thickness at the upper side is at least 1.5 mm; the thickness at the lower side is at least 1 mm; the laminated glass has higher functionality in a portion close to a passenger's head (ears) that senses a sound, more than other portions; and the laminated glass can prevent optical distortion due to the interlayer.

## Description

### TECHNICAL FIELD

The present invention relates to a laminated glass to be employed for windows for automobiles.

### BACKGROUND ART

As a glass window provided in front of a passenger in a vehicle such as a windshield for an automobile, usually a laminated glass constituted by two glass sheets opposed to each other and an interlayer sandwiched between them, is employed.

In recent years, according to increasing demand for high-functional glass windows for achieving light-weighting of automobiles and improvement of amenity at the same time, various types of windshields having various functions are devised (for example, Patent Document 1).

Generally speaking, in order to reduce the weight of window glass, it is necessary to reduce the size of glass sheet used or to reduce its thickness. In order to reduce the weight of window glass without changing the shape design, it is necessary to reduce the thickness of the glass sheet.

Further, on a surface of an interlayer for laminated glass before it is laminated with glass sheets, an emboss treatment is usually applied to prevent a blocking phenomenon, to improve workability or to improve degassing performance at a time of preliminary press-bonding.

In addition, for an interlayer in a high-functional laminated glass such as a laminated glass having improved acoustic preventing performance (hereinafter it is also referred to as acoustic preventing laminated glass), a multilayer interlayer is often employed, which is constituted by laminating resin layers having various functions (for example, Patent Document 2).

However, in such a laminated glass employing a multilayer interlayer, an optical distortion is often formed to cause a problem that a see-through image is distorted. To cope with this problem, emboss methods not causing optical distortion at an interface between layers, such as a method of forming modified emboss shape, are proposed (for example, Patent Document 3).

Patent Document 1: JP-A-10-177390

Patent Document 2: JP-A-11-035348

Patent Document 3: JP-A-2004-075501

### DISCLOSURE OF THE INVENTION

### PROBLEMS TO BE SOLVED BY THE INVENTION

Generally speaking, as a mass per a unit area (surface density) of a material increases, acoustic preventing performance increases. For this reason, when the thickness of a glass sheet is reduced to reduce its weight, the acoustic preventing performance of the glass sheet decreases. As a result, there is a problem that sounds outside of an automobile enter into a cabin to decrease amenity in the cabin. Here, the sounds entering from outside of an automobile when the automobile is running include a running sound, a wind sound, an engine sound and a hitting sound of raindrops.

When a laminated glass is employed for a windshield as a fixed window of an automobile, the windshield has natural frequencies of roughly 100 Hz, 150 Hz and 300 Hz although the size of laminated glass changes according to the size of the automobile. Further, also when a laminated glass is employed for a sliding glass window on a side of automobile, since such a sliding glass window is fixed by a sash, it has natural frequencies in the range of roughly from 100 to 300 Hz.

Further, running sounds of an automobile are concentrated to frequency bands of roughly from 30 to 50 Hz and from 100 to 200 Hz, and hitting sounds of raindrops or engine sounds contain sounds in a frequency region of about from 100 to 400 Hz. Accordingly, sound waves of running sound of an automobile, hitting sound of raindrops and an engine sound that are entering into a laminated glass from the outside of the automobile, are resonated with the natural frequency of the laminated glass and amplified. As a result, relatively low frequency noise in the vicinity of from 100 to 200 Hz enters into the cabin through the laminated glass.

Meanwhile, for a conventional laminated glass and a functional laminated glass such as an acoustic preventing laminated glass, it is substantially difficult to partially change the thickness of the laminated glass. Accordingly, in e.g. an acoustic preventing laminated glass, there is no significant difference in acoustic preventing performance between portions of the glass. Accordingly, decrease of acoustic preventing performance at a time of decreasing the thickness of glass sheets to reduce the weight of an automobile, is compensated by increasing acoustic preventing performance in the entire region of the laminated glass. Namely, it has not been realized to selectively change or improve acoustic preventing performance depending on the positional relationship between a laminated glass and a passenger so that portions of the laminated glass have respective optimum acoustic preventing performance.

The present invention has been made to solve the above problems, and it is an object of the present invention to obtain a functional laminated glass employing thin glass sheets to reduce the weight of automobiles, which can selectively provide appropriate performance to each portion of the laminated glass required depending on the positional relationship between the laminated glass and a passenger.

### MEANS FOR SOLVING THE PROBLEMS

The present invention provides the following inventions:
[1] A laminated glass for vehicles comprising two curved glass sheets and an interlayer made of resin provided between the two glass sheets, that are laminated together, wherein the interlayer made of resin comprises at least one resin layer having a functionality, and the thickness of the interlayer at the upper side is from 1.5 to 3 times of the thickness at the lower side, and the thickness of the interlayer at the upper side is at least 1.5 mm and the thickness at the lower side is at least 1 mm.
[2] A laminated glass for vehicles comprising two curved glass sheets and an interlayer of multilayer structure made of resin provided between the two glass sheets, that are laminated together, wherein the interlayer comprises a plurality of first resin layers and a second resin layer having a hardness lower than those of the first resin layers, and the first resin layers and the second resin layer sandwiched between them constitute at least a three-layer structure, wherein the thickness of each of the first resin layers is at least 0.3 mm at the upper side and at least 0.3 mm in the entire region within 400 mm from the lower side, and wherein the thickness of the second resin layer at the upper side is from 1.5 to 3 times of the thickness at the lower side.
[3] A laminated glass for vehicles comprising two curved glass sheets and an interlayer of multilayer structure made of resin provided between the two glass sheets, that are laminated together, wherein the multilayer interlayer comprises a plurality of first resin layers and a second resin layer having a hardness lower than those of the first resin layers, and the first resin layers and the second resin layer sandwiched between them constitute at least a three-layer structure, wherein the thickness of each of the first resin layers is at least 0.3 mm at the upper side and at least 0.3 mm in the entire region within 400 mm from the lower side, and wherein the thickness of the second resin layer is at least 0.15 mm at the upper side and at least 0.1 mm at the lower side.
[4] The laminated glass for vehicles according to [2] or [3], wherein the ratio between the total thickness of the plurality of first resin layers and the thickness of the second resin layer at the upper side is substantially equal to that at the lower side.
[5] The laminated glass for vehicles according to any one of [2] to [4], wherein at the upper side and the lower side, the thickness of the second resin layer is from 10 to 20% of the total thickness of layers constituting the interlayer.
[6] The laminated glass for vehicles according to any one of [2] to [5], wherein the thickness of the second resin layer is at least 0.15 mm in the entire region more than 500 mm from the lower side.
[7] The laminated glass for vehicles according to any one of [2] to [6], wherein the thickness of the second resin layer at the upper side is thicker than that at the lower side.
[8] The laminated glass for vehicles according to any one of [2] to [7], wherein the interlayer comprises two said first resin layers and the second resin layer having a hardness lower than those of the first resin layers, and the first resin layers and the second resin layer sandwiched between the first resin layers constitute a three-layer structure.
[9] The laminated glass for vehicles according to any one of [1] to [8], wherein the thickness of the interlayer simply decreases from the upper side towards the lower side.
[10] The laminated glass for vehicles according to any one of [2] to [9], wherein the thickness of at least one layer constituting the multilayer interlayer simply decreases from the upper side towards the lower side.
[11] The laminated glass for vehicles according to any one of [1] to [10], wherein a strip-shaped shade functional region is provided along the upper side of the interlayer.

Here, the hardness of a resin layer in the present invention can be defined by Rockwell hardness and at least one of elasticity modulus and elongation percentage. The second resin layer means a layer having a Rockwell hardness smaller than those of the first resin layers and having at least one of elasticity modulus and elongation percentage larger than those of the first resin layers.

### EFFECTS OF THE INVENTION

According to the present invention, it is possible to obtain a functional laminated glass employing thin glass sheets to reduce the weight of automobiles, which can provide appropriate performance to each portion of the laminated glass according to the positional relationship between the laminated glass and a passenger.

Each of conventional acoustic preventing laminated glasses has uniform acoustic preventing performance in the entire surface. Accordingly, such a laminated glass has been designed to exhibit required performances in the entire region regardless of the distance to a passenger or the position of noise source. In order to exhibit required functions such as acoustic preventing performance, it has been necessary to increase the thickness of glass sheets or to employ an interlayer having high acoustic preventing performance. As a result, such a construction provides excessive performance to some part of the window and causes unnecessary increase of weight, which has been preventing cost-down or light-weighting.

To cope with this problem, the present invention provides a high-functional laminated glass in which an additional function such as acoustic preventing performance that has not been provided on conventional laminated glasses, is selectively increased at a portion close to a passenger's head (ears) which detects a sound, more than other portions.

In the present invention, the thickness of the interlayer at the upper side is from 1.5 to 3 times of the thickness at the lower side, whereby the acoustic preventing performance can be selectively increased at a portion close to the passenger's head (ears) which detects a sound, more than other portions. As a result, in a laminated glass employing thin glass sheets to reduce the weight of vehicles, it is possible to reduce the noise of relatively low frequencies in the vicinity of from 100 to 400 Hz that is uncomfortable to a passenger, without evenly increasing acoustic preventing performance in the entire laminated glass, and to improve amenity.

Further, since the thickness of the interlayer at the upper side is different from the thickness at the lower side, the thickness of the laminated glass at the upper side is different from that at the lower side. Accordingly, the natural frequency of the laminated glass slightly changes depending on its portion. As a result, in response to a vibration of specific frequency, the laminated glass is not entirely resonated, and an effect of reducing noise and vibration entering from the outside of an automobile can be expected.

Further, in the above construction, when the thickness of the interlayer is at least 1.5 mm at the upper side and at least 1 mm at the lower side, a minimum layer thickness of the interlayer capable of providing appropriate acoustic preventing performance for each portion of the laminated glass, can be obtained. As a result, it is possible to realize a laminated glass which has basic performances of laminated glass in the entire region of the laminated glass, wherein an additional function such as acoustic preventing function is selectively increased in a portion close to a passenger's head in which sensitive organs are concentrated, more than other portions.

Further, in a construction employing a multilayer interlayer to be employed in a high-functional laminated glass such as an acoustic preventing laminated glass, the present invention can prevent an optical distortion due to the interlayer that has been a problem at a time of use. For this reason, even in a case of employing a multilayer interlayer, it is possible to achieve an economic design of laminated glass, which contributes to reduce weight of vehicles.

Further, in a construction employing a multilayer interlayer having a wedge-shaped cross section, the thickness of first resin layers having relatively high hardness is at least 0.3 mm in a region where the thickness of the laminated glass is minimum, that is, in the entire region within 400 mm from the lower side (a region encompassed by the lower side, a line at 400 mm distant from the lower side and right and left sides between these lines when the laminated glass is observed from front), whereby the following objects can be achieved at the same time: ① compliance to safety standards such as penetration resistance required for a safety glass by the interlayer having minimum required thickness in the entire region of the laminated glass, and ② prevention of optical distortion caused by the interlayer.

This is because no influence of surface irregularities of the interlayer formed by an emboss treatment that is the main cause of optical distortion, remains at a time of press-bonding the interlayer with glass sheets to constitute a laminated glass. By making the thickness of the first resin layers at least 0.3 mm in a region where the thickness of the laminated glass becomes minimum, the shape-retention property of the interlayer is increased and it becomes possible to prevent optical distortion of a laminated glass without sacrificing blocking resistance of the interlayer.

Further, in the present invention, the multilayer interlayer has a construction that a layer having low hardness is supported by layers having high hardness whose minimum thickness is defined. Accordingly, it becomes easy to extend the multilayer interlayer so as to curve the upper side and the lower side to conform to a design of window. As a result, it becomes possible to use an interlayer including a layer having low hardness, in a laminated glass, that has been difficult heretofore.

Further, the thickness of the second resin layer at the upper side is from 1.5 to 3 times of the thickness at the lower side, whereby it is possible to selectively increase acoustic preventing performance in a portion close to a passenger's head (ears) which senses a sound, more than other portions. As a result, in a laminated glass employing thin glass sheets to reduce the weight of vehicles, it is possible to reduce noise of relatively low frequencies in the vicinity of from 100 to 400 Hz that is uncomfortable to a passenger, without evenly increasing acoustic preventing performance of the entire laminated glass, whereby amenity is improved.

Further, since the thickness of the interlayer at the upper side is different from that at the lower side, the thickness of the laminated glass at the upper side is different from that at the lower side. Accordingly, the natural frequency of the laminated glass changes depending on its portion. As a result, the laminated glass is not entirely resonated in response to vibration of a specific frequency, and an effect of reducing entering of noise and vibration from outside the vehicle can be expected.

Further, in a construction that the thickness of the second resin layer at the upper side is at least 0.15 mm and the thickness at the lower side is at least 0.1 mm, it is possible to determine the minimum thickness of the second resin layer capable of providing appropriate acoustic preventing performance for each portion of a laminated glass. As a result, a laminated glass is realized, which has performances required for a safety glass in the entire region of the laminated glass, wherein the acoustic preventing performance is selectively increased in a region close to a passenger's head which senses a sound, more than other portions.

Further, in a construction that the ratio between the total thickness of the plurality of first resin layers and the thickness of the second resin layer at the upper side is substantially equal to that at the lower side, besides the above effects, it is possible to determine the minimum thickness of the multilayer interlayer capable of providing appropriate acoustic preventing performance for each portion in the entire area of the laminated glass. As a result, besides the above effects, it is possible to realize a laminated glass which satisfies performances required for a safety glass, which prevents optical distortion due to the interlayer, and which contributes also to reduce the weight of vehicles. Further, since the ratio of the total thickness of the plurality of first resin layers and the thickness of the second resin layer is substantially constant, after layers each having uniform thickness are laminated to form an interlayer, it becomes easy to extend the interlayer to curve the upper side and the lower side to conform to a design of window.

Further, in a construction that the thickness of the second resin layer is from 10 to 20% of the total thickness of all layers constituting the multilayer interlayer at the upper side and the lower side, besides the above effects, it is possible to minimize the thickness of the second resin layer at both of the upper side and the lower side of the laminated glass. It is easy to impart various functions such as acoustic preventing function, reflection or absorption function of infrared rays and/or ultraviolet rays, or transmittance-control function by using coloring, to the second resin layer sandwiched between the first resin layers, but imparting these functions increases cost. Accordingly, optimally designing the thickness of the second resin layer within a predetermined thickness range not only enables to appropriately balance the above performances, but also is economically advantageous.

Further, in a construction that the thickness of the second resin layer is at least 0.15 mm in the entire region of more than 500 mm distant from the lower side (a region encompassed by a line at 500 mm distant from the lower side, the upper side and left and right sides between them), and in a construction that the thickness of the second resin layer at the upper side is thicker than that at the lower side, it becomes possible to further increase acoustic preventing performance of the laminated glass at a portion close to a passenger's head in which acoustic preventing performance is the most highly required.

### BRIEF DESCRIPTION OF DRAWINGS

Fig. 1: A schematic view showing an example of the construction of a laminated glass for vehicles according to the present invention, that is used as a windshield for automobiles.
Fig. 2: A cross-sectional view showing an example of the construction of the laminated glass.
Fig. 3: A cross-sectional view showing an example of the construction of the laminated glass.
Fig. 4: A cross-sectional view showing an example of the construction of a multilayer interlayer according to the present invention.
Fig. 5: A plan schematic view showing the construction of Fig. 4.
Fig. 6: A cross-sectional view showing another example of the construction of the laminated glass according to the present invention.
Figs. 7A and 7B: Cross-sectional schematic views showing an example of interlayer before and after extension.

### EXPLANATION OF NUMERALS

- 10:: laminated glass
- 11a,: 11b: glass sheet
- 12:: interlayer
- 12a,: 12b: first resin layer (surface layer)
- 12c:: second resin layer (acoustic preventing layer)
- 14:: normal region
- 15:: shade band
- 16:: high functional region
- 21:: dashboard (vehicle main body)
- 23:: steering wheel
- 26:: passenger
- 31:: 1st face
- 32:: 2nd face
- 33:: 3rd face
- 34:: 4th face

### BEST MODE FOR CARRYING OUT THE INVENTION

Now, the laminated glass according to the present invention is described with reference to drawings by using an example in which the laminated glass is used as a windshield for automobiles.

Here, in the present invention, the upper side and the lower side mean end lines at the upper side and the lower side respectively when a laminated glass is attached to a vehicle, and right and left sides mean other two sides. Further, a convex side surface of a glass sheet disposed in the convex side among two curved glass sheets is defined as 1st face, its concave side surface is defined as 2nd face, the convex side surface of a glass sheet disposed in the concave side is defined as 3rd face, and its concave side surface is defined as 4th face. Namely, in a state that the laminated glass is attached to e.g. an automobile, faces from the car exterior side towards car interior side are defined as 1st face to 4th face respectively. Further, in the present invention, "upper side portion" means a region in the vicinity of the upper side of a laminated glass, and "lower side portion" means a region in the vicinity of the lower side of the laminated glass.

Further, an acoustic preventing laminated glass in the present invention is a laminated glass capable of shielding propagation of sound by suppressing resonation of sound waves (sound waves of various sounds generated at a time of running an automobile or a sound of engine) entering into the cabin from the outside of the automobile through the laminated glass, with the characteristic vibration of the laminated glass. Particularly, the laminated glass of the present invention is excellent in acoustic preventing performance not only against noise in high frequency region generated outside an automobile that is in the vicinity of coincident resonant frequency that has been attempted to reduce by conventional acoustic preventing glasses, but also against sound waves in the vicinity of from 100 to 200 Hz that is the frequency region of running sound of automobile, hitting sound of raindrops or engine sound, and that tends to be influenced by a natural frequency of the laminated glass. As a result, it is possible to effectively shield a noise of relatively lower frequency in the vicinity of from 100 to 200 Hz that is uncomfortable for a passenger, and to improve sound amenity in the cabin.

As described above, the thickness of the interlayer of the present invention at the upper side is larger than the thickness at the lower side. By this construction, not only an effect of improving sound amenities in the cabin but also an effect of suppressing fogging of a laminated glass can be expected. The main body of a vehicle such as an automobile is mainly made of a steel plate having high thermal conductivity. Accordingly, the upper side portion of a laminated glass (a portion close to the roof of a vehicle) tends to have an effect of an ambient temperature. For example, the temperature of the upper side portion of a laminated glass drops by an influence of the roof cooled by the outside air in a cold district, whereby the portion tends to be fogged. The upper side portion of a laminated glass is close to a passenger's head and is a region relating to visibility. In the present invention, the thickness of an interlayer (a layer made of resin having low thermal conductivity) at the upper side is thicker than that at the lower side, and accordingly, the interlayer can be expected to delay temperature drop caused by flow of cold air and to prevent fogging.

Further, when a laminated glass for a vehicle of the present invention is used as a windshield, components such as various types of sensors (e.g. a rain sensor), a mirror base or a mirror are bonded on a car-interior side of the upper side portion of the laminated glass. Among these components, components projecting from the car interior side surface of the laminated glass tend to be vibrated by vibration caused by running of the vehicle, and the vibration of the components may resonate with the characteristic vibration of the laminated glass in some cases. In the laminated glass of the present invention, since the thickness of the interlayer at the upper side is thicker than its thickness at the lower side, an effect of absorbing or easing vibration can be expected.

### FIRST EMBODIMENT

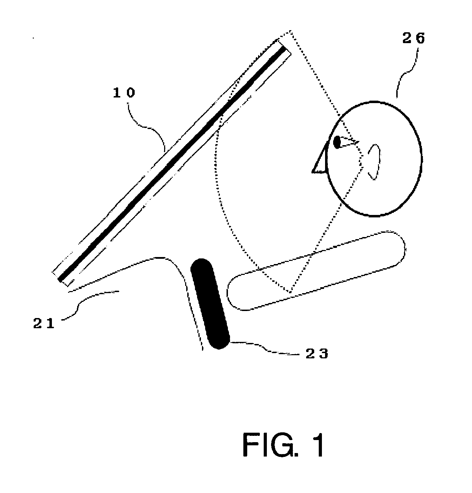

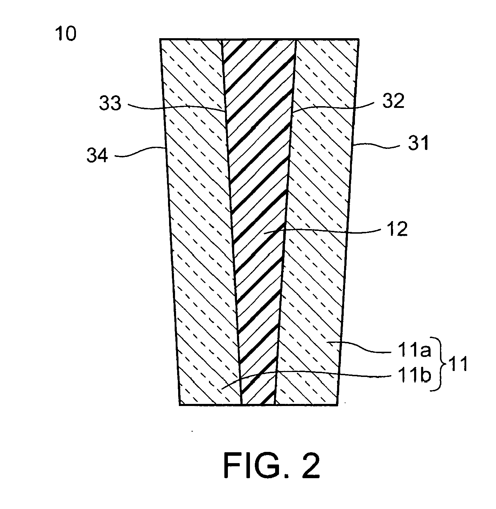

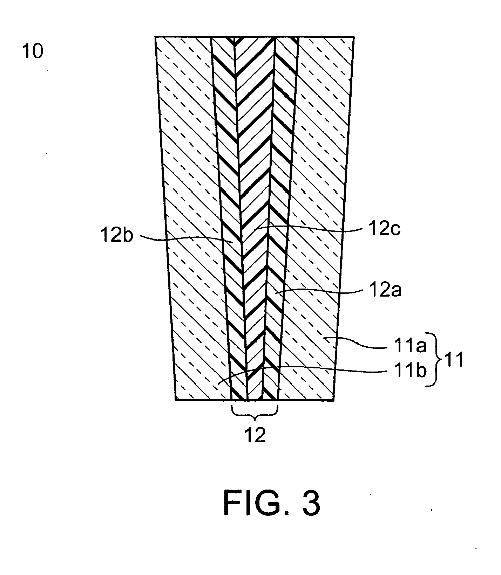

Fig. 1 is a schematic view showing an example of the construction of a laminated glass according to the present invention that is used as a windshield for automobiles, and Figs. 2 and 3 are schematic cross-sectional views each showing an example of the construction of the laminated glass.

As shown in Fig. 1, a windshield 10 is attached to the front face of a vehicle (automobile) in a state that the windshield 10 is tilted so that its upper side portion shifted backwardly. A passenger (a driver) is seated on a seat (not shown) located in the rear side of a steering wheel 23 disposed in the vicinity of a dashboard 21. As a result, the upper side portion of the windshield 10 becomes closest (shown as a broken line) to the passenger's head (ears) sensing a sound.

As shown in Fig. 2, the laminated glass 10 is constituted by two curved glass sheets 11a and 11b and an interlayer 12 made of resin sandwiched between them. The thickness of the glass sheets 11 are each uniform and the interlayer 12 has a wedge-shaped cross section in which its upper side is thicker and its lower side is thinner. The interlayer 12 is bonded to a 2nd face (2nd face when the glass sheet 11a is employed in a laminated glass) of the glass sheet 11a and to a 3rd face (3rd face when the glass sheet 11b is employed in a laminated glass) of the glass sheet 11b, to constitute a laminated glass 10 (from now, the terms 1st face to 4th face used for glass sheets mean 1st face to 4th face when these glass sheets are employed in a laminated glass).

The two glass sheets 11 are bonded so as to sandwich the interlayer 12 having a wedge-shaped cross section, and for this purpose, the 1st face or the 2nd face being a surface of the glass sheet 11a is not parallel with the 3rd face or the 4th face being a surface of the glass sheet 11b. As a result, the angle between two glass sheets is defined by the 2nd face and the 3rd face being interfaces between the interlayer 12 and glass sheets, whereby the cross section of the laminated glass 10 also becomes a wedge shape.

In a case of employing an interlayer of single layer structure, the interlayer 12 that is extended to curve its upper side and lower side has a thickness of at least 1.5 mm at its upper side and a thickness of at least 1 mm at its lower side. Further, in order to achieve light weight, it is a matter of course that the thickness of the interlayer 12 is preferably as thin as possible within a range that its performance is obtainable. By making the interlayer to have the above thickness, it is possible to determine the minimum thickness of the interlayer capable of providing appropriate acoustic preventing property for each portion of the laminated glass while performances as a safety glass such as penetration resistance are maintained.

In a case of employing an interlayer of single layer structure, the cross-sectional shape of the interlayer is not particularly restricted so long as its thickness at the upper side is from 1.5 to 3 times of its thickness at the lower side, its thickness at the upper side is at least 1.5 mm and its thickness at the lower side is at least 1 mm. However, the cross-sectional shape is preferably a shape in which the thickness of the interlayer simply decreases from its upper side towards the lower side as shown in Fig. 2 since such a shape makes design of interlayer easy, enables to efficiently produce a laminated glass and improves external appearance of the laminated glass.

Fig. 3 is a schematic cross-sectional view showing an example of the construction employing a multilayer interlayer as the interlayer. Its basic construction is substantially the same as that in the example of Fig. 2, but the interlayer 12 is a multilayer interlayer comprising surface layers (first resin layers) 12a and 12b and an acoustic preventing layer (second resin layer) 12c sandwiched between the surface layers. The interlayer 12 is bonded to the 2nd face of the glass sheet 11a and the 3rd face of the glass sheet 11b, to constitute a laminated glass 10. The surface layers 12a and 12b and the acoustic preventing layer 12c sandwiched between them each has a wedge-shaped cross section in which its upper side is thick and its lower side is thin. Further, the acoustic preventing layer 12c is made of a resin having a hardness lower than those of the surface layers.

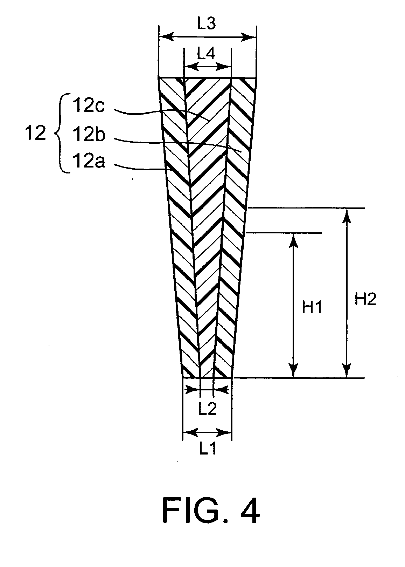

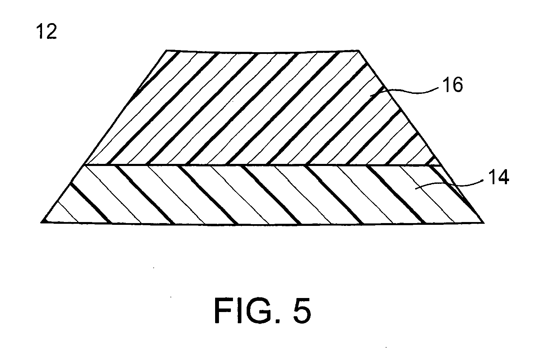

Fig. 4 is a cross-sectional view showing an example of the construction of a multilayer interlayer according to the present invention, and Fig. 5 is a schematic front view showing the construction of Fig. 4. The surface layers 12a and 12b each has a thickness of at least 0.3 mm in the entire region (entire region of Hl) within 400 mm from the lower side. Further, the thickness L4 of the acoustic preventing layer 12c at the upper side is from 1.5 to 3 times of the thickness L2 at the lower side.

Further, in a case of employing a multilayer interlayer, by extending the interlayer 12 so that the thickness (L3) at the upper side becomes at least 1.1 mm and the thickness (L1) at the lower side becomes at least 0.65 mm, it becomes possible to obtain performances required for a laminated glass for automobiles as well as acoustic preventing performance. Since a multilayer interlayer is excellent in physical performance such as penetration resistance as compared with a single layer interlayer, it is possible to reduce the total thickness of the interlayer as a total of thicknesses of layers constituting the interlayer. Accordingly, such a multilayer interlayer contributes to reduce weight of an automobile.

Further, since the surface layers 12a and 12b each has a thickness of at least 0.3 mm in the entire region within 400 mm from the lower side, it is possible to prevent optical distortion due to an emboss treatment of a surface of the interlayer. This is because the effect of irregularities usually formed on a surface of an interlayer for a laminated glass for the purpose of preventing blocking and improving degassing performance, do not remain when the interlayer is press-bonded with glass sheets. Further, since the thickness of each surface layer is at least 0. 3 mm in the entire region of the interlayer, it becomes possible to improve shape-retention property of the interlayer 12, and to prevent optical distortion of a laminated glass when the interlayer is laminated to form the laminated glass, without impairing anti-blocking property of the interlayer 12.

Further, in the acoustic preventing layer 12c, the thickness at a portion 16 close to a passenger's head in the upper side portion is preferably thicker than the thickness at a portion 14 distant from the passenger's head. Specifically, the thickness L4 at the upper side is preferably from 1.5 to 3 times of the thickness L2 at the lower side, more preferably from 1.8 to 2.3 times of the thickness L2. The reason is because when the acoustic preventing layer has such thicknesses, it is possible to selectively increase the acoustic preventing performance in a portion close to a passenger's head which senses a sound, than other portions. As a result, it is possible to reduce a noise of relatively low frequency in the vicinity of from 100 to 400 Hz that is uncomfortable to a passenger, and to improve amenity. Further, since the thickness of the laminated glass changes between its upper side and lower side, the laminated glass does not entirely resonate with a vibration of specific frequency, and an effect of reducing noise and vibration entering from the car-exterior side, can also be expected.

Further, in the multilayer interlayer 12, since layers having high hardness support a layer having low hardness, it becomes easy to extend the multilayer interlayer 12 to have a wedge-shaped cross section. Accordingly, it becomes possible to employ an interlayer 12 having a layer of low hardness in a laminated glass, that has been difficult heretofore. Further, when at least one layer of surface layers having high hardness has a wedge-shaped cross section in which the thickness at the upper side is thicker than that at the lower side, the shape-retention property of the interlayer 12 improves and control of the thickness of the interlayer becomes easy.

Further, when the interlayer 12 has a three-layer structure in which an acoustic preventing layer 12c having low hardness is sandwiched between surface layers 12a and 12b having high hardness, the layers having high hardness have surface irregularities in the entire region of the interlayer 12. Besides, the layers having high hardness each has a minimum thickness capable of preventing distortion due to the irregularities. Accordingly, it is possible to effectively prevent optical distortion of the laminated glass. Further, since surface layers 12a and 12b having high shape-retention properties are disposed on a surface of the interlayer, it becomes further easy to extend the interlayer 12.

Further, it becomes possible to reduce the thickness of the acoustic preventing layer 12c to a minimum required thickness. Accordingly, it is possible to reduce the effect of the difference of refractive index at interfaces between layers. Further, it becomes possible to reduce the thickness of a resin layer having functionality to a minimum required thickness, which contributes to achieve economical specification.

Further, by quantifying the minimum thickness of the surface layers 12a and 12b, it becomes possible to achieve efficient construction of the interlayer and efficient design of a laminated glass, which contributes to reduce the weight of automobiles and cut costs. Further, by defining the setting range of the minimum thickness of surface layers, it is possible to reduce work load at a time of controlling the thickness of the interlayer 12 or in the extension step of the film.

In the acoustic preventing layer 12c in this example, the thickness L4 at the upper side is at least 0.15 mm, preferably at least 0.2 mm. The thickness L2 at the lower side is at least 0.1 mm. The reason is that in such a thickness range, it is possible to impart the laminated glass with performances required for a laminated glass in the entire region, and at the same time to selectively increase acoustic preventing performance in a portion (16 in Fig. 5) close to a passenger's head which senses a sound, more than other portions. Further, when the thickness is at least 0.15 mm in a region (entire region more than 500 mm from the lower side) closer to the upper side than the portion indicated by H₂, the effect of reducing a noise propagated to a passenger further increases.

Further, it is further preferred that the ratio between the total thickness of two layers that are the surface layers 12a and 12b, and the thickness of acoustic preventing layer 12c, at the upper side is substantially equal to that at the lower side (L3-L4:L4≒L1-L2:L2). The reason is because in such a thickness condition, it is possible to satisfy performances required for a safety glass, and prevent optical distortion due to the interlayer 12, and to contribute to reduce the weight of automobiles.

In addition, when the ratio of the thickness of the acoustic preventing layer 12c based on the total thickness of the surface layers 12a and 12b and the acoustic preventing layer 12c, is substantially constant (L1:L2≒L3:L4), it becomes further easy to extend these layers so as to have curvatures at the upper side and the lower side after these layers each having a uniform thickness are laminated. Further, the ratio of the thickness of the acoustic preventing layer 12c to the total thickness of three layers constituting the interlayer 12 (L2/L1x100 or L4/L3x100) in each of the upper side and the lower side, is preferably from 10 to 20%, more preferably from 13 to 17% considering the balance of functionality and cost of the interlayer. Optimally designing the thickness of the interlayer 12c within a predetermined range, not only enables to appropriately balance performances but also is advantageous in economic viewpoint.

Further, the thickness of each of the surface layers 12a and 12b at the upper side is preferably at least 0.5 mm, more preferably at least 0.6 mm. When the surface layers 12a and 12b having high hardness each has a predetermined thickness, shape-retention property of entire interlayer improves. As a result, it becomes possible to eliminate the effect of irregularities due to emboss treatment on a surface of the interlayer more securely, and to prevent optical distortion of a laminated glass.

Further, when the thickness of the acoustic preventing layer 12c is at most 0.5 mm, it is possible to suppress the effect of refractive index at interfaces between the acoustic preventing layer 12c and adjacent layers, to an extent not to affecting actual view. Further, the acoustic preventing layer 12c may have a uniform thickness (e.g. 0.1 mm) in the entire region of interlayer. When the thickness of the acoustic preventing layer is uniform, it is possible to further efficiently prevent generation of optical distortion.

In the above description, an example of interlayer in which the surface layers 12a and 12b each has a wedge-shaped cross section. However, the construction may be such that one of the surface layers has a wedge-shaped cross section and the other one of them has a uniform thickness, so long as they each have a thickness of at least 0.3 mm in the entire region within 400 mm from the lower side. In this construction, each layer may be formed separately and they may be laminated together to produce an interlayer, whereby the production process can be more flexible.

Also in a case of using a multilayer interlayer, the thickness of the interlayer preferably simply decreases from the upper side towards the lower side. In this case, it is sufficient that the thickness of at least one layer among layers constituting the multilayer interlayer, simply decreases from the upper side towards the lower side, and various combinations are possible. Specifically, the following combination is preferred:
(1) A combination that the thicknesses of the surface layers 12a, 12b and the acoustic preventing layer 12c each simply decreases from the upper side towards the lower side;
(2) A combination in which the thickness of one of the surface layers and the thickness of the acoustic preventing layer 12c each simply decreases from the upper side towards the lower side; and
(3) A combination in which the thickness of the acoustic preventing layer 12c simply decreases from the upper side towards the lower side.

In each of these combinations, a layer whose thickness does not simply decreases from the upper side towards the lower side, preferably has a uniform thickness.

By such a construction, the thickness of a multilayer interlayer simply decreases from the upper side towards the lower side, whereby it becomes easy to design the interlayer, it is possible to efficiently produce a laminated glass, and it is possible to improve external appearance of a laminated glass.

Further, by making use of the wedge-shaped cross section, it is also possible to use a laminated glass for automobiles as a screen for displaying an image from a head-up display device. By appropriately selecting the angle between two surfaces of the interlayer, it is possible to improve the performance of head-up display.

A multilayer interlayer may have a construction that the thickness of the interlayer selectively changes only in a part of entire region, to the extent of not causing optical distortion when it is laminated to constitute a laminated glass. Namely, the thickness of each layer can be partially changed to the extent that e.g. refractive index, absorption of e.g. visible light and the reflectivity at an interface between layers, do not cause an optical distortion. In this construction, it becomes possible to appropriately change the thickness of interlayer for each region of laminated glass, and to improve design flexibility. Further, it becomes possible to form an interlayer with minimum thickness for each region, whereby economic design and production become possible.

As a material for forming the surface layers 12a and 12b of an interlayer, a known transparent resin may be employed, and polyvinyl butyral (PVB) or ethylene-vinyl acetate copolymer (EVA) is preferred. To these materials, a plasticizer or a UV (ultraviolet)-absorbing agent is usually added. Further, IR (infrared)-shielding particles may also be dispersed in such a material.

Further, from the viewpoint of easiness in production of the interlayer 12, the acoustic preventing layer 12c is preferably made of a material having lower hardness than those of surface layers, and capable of maintaining a film-shape as it is. As such a material, a PVB denaturated material, an ethylene vinyl acetate copolymer (EVA) type material, a urethane resin material, a polyvinyl chloride resin material or a silicone resin material, may be employed.

The acoustic preventing layer 12c has a low hardness, and it is effective to lower the rigidity as much as possible. The reason is that when an acoustic preventing layer is formed by using a material that has marginal brittleness to maintain film-shape (for example, in a state of agar or gelatin that is coagulated by cooling), its acoustic preventing effect increases to improve sound amenity in the cabin. Specifically, a film having lower Rockwell hardness and having higher elasticity or higher elongation percentage than a polyvinyl butyral film employed for an interlayer of common laminated glass for automobile windows, is preferably employed as the acoustic preventing layer 12c.

The hardness of the surface layers 12a and 12b is different from the hardness of the acoustic preventing layer 12c, but these hardnesses can be changed by changing the composition of the material of each layer. For example, in a case of employing PVB for both of the materials of surface layers and the acoustic preventing layer, the percentage of plasticizer added to the surface layers preferably differs by at least 10 mass% from that added to the acoustic preventing layer. Further, the amounts of plasticizer added at this time are preferably about 30 mass% and 40 mass% for the surface layers and the acoustic preventing layer respectively, under the condition that the difference of the additive percentage is at least 10 mass% between them.

### SECOND EMBODIMENT

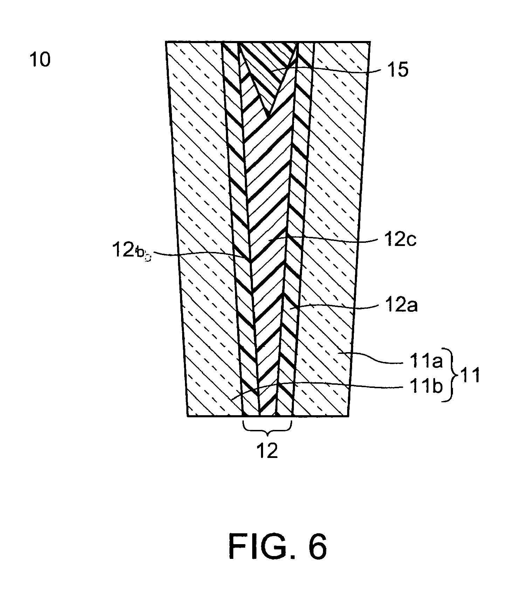

Fig. 6 is a cross-sectional view showing another example of the construction of a laminated glass according to the present invention. As shown in the figure, the interlayer 12 may be provided with a shade functional region 15. The shade functional region is a region that is so-called shade band in which the visible light transmittance is lowered, and which can be formed by mixing a colorant into an interlayer 12. Further, such a shade functional region can also be formed by coating or printing a surface of interlayer with a colorant.

The shade functional region 15 is usually formed in a band-shaped region along the upper side of a windshield. At this time, the shade functional region may be formed to have a uniform visible light transmittance in its entire region. Further, dot-shaped patterns of colorant may be provided in the shade functional region to form a shade band. Further, a gradation may be provided in the shade functional region from the upper side of the interlayer towards the lower side direction. It is preferred that the visible light transmittance gradually increases from the upper side of the interlayer towards the lower side direction, since such a construction can impart antidazzle property without preventing visibility of a passenger. Further, the boarder between the shade functional region 15 and a no-shade functional region having high visible light transmittance, may be blurred to be unclear.

The shade band 15 may be formed in the acoustic preventing layer 12c as shown in Fig. 6, or it may be formed in the surface layer 12a or 12b. When a colored interlayer is employed, it is possible to produce a laminated glass having a shade functional region 15 by laminating glass sheets 11 and such an interlayer 12, which can simplify the production process. Further, when surface layers 12a and 12b are colored, migration of colorant to other layers hardly occurs as compared with a case of coloring an acoustic preventing layer 12c having low hardness, and it becomes possible to prevent generation of e.g. blurring at interfaces between the shade band and other layers.

Further, by coloring both of the surface layers 12a and 12b, a color tone observed from a car-interior side and a color tone observed from a car-exterior side become the same, and the difference between designs from car-interior side and car-exterior side becomes small. Further, control of retrieving direction of an interlayer 12 at time of producing the interlayer or control of the direction (back side/front side) of an interlayer at a time of laminating it with glass sheets to produce a laminated glass, become unnecessary, and an effect of simplifying production control can be expected.

The shade band 15 can be formed by co-extruding a resin colored with e.g. a pigment or a dye into a notch formed in advance in the central portion of the surface layer 12a and/or 12b. In this method, the shade band is easily produced by co-extrusion, and since the colored layer is not exposed to the outside of the surface layer 12, discoloring can be prevented and migration of the colorant to the acoustic preventing layer 12c or to glass sheets 11 is further prevented. Further, the shade band 15 may be formed not only in the central portion of the surface layer 12a or 12b, but also in a portion close to the acoustic preventing layer 12c or the glass sheet 11 so as to be unevenly distributed. Further, when the shade band 15 is disposed so as to be added to a surface (a surface to be in contact with a glass sheet) of an interlayer, the interlayer with shade band can be easily formed by forming the shade band separately and laminating it to the interlayer without using co-extrusion.

The shade band 15 may be formed in/on any layer of the multilayer interlayer 12, and colored portions may be formed not only in/on a single layer but only in/on a plurality of layers consisting of the surface layers 12a, 12b and the layer 12c, to form shade bands, and these shade bands may be combined for use. Specifically, a shade band may be preferably formed on at least one of the surface layers 12a and 12b. Further, an interlayer provided with a shade band and a normal interlayer may be arranged at upper and lower positions respectively of a vehicle. By this construction, it is possible to increase the effect of coloring and to increase design flexibility so that e.g. change of the degree of coloring of each layer becomes possible. In this example, an example of forming a shade band in a multilayer interlayer is shown, but it is a matter of course that various constructions of shade band can be applied also to a single layer interlayer.

Further, in the production of interlayer provided with a shade band, such an interlayer may be formed by separately forming a colored interlayer and a non-colored interlayer, and arranging them in the upper and lower positions respectively in the view field, and bonding them together to form an interlayer. Further, it may be formed by an integral molding by e.g. co-extrusion. Further, a colored interlayer and a non-colored interlayer may be arranged in a cross-sectional direction and laminating them together to form an interlayer.

Further, the interlayer 12 may be provided with IR-shielding function. For this purpose, surface layer 12a or 12b or an acoustic preventing layer 12c, in which IR-shielding fine particles are dispersed, may be employed. These layers may be formed by employing a resin material
in which such fine particles are dispersed. The IR-shielding fine particles may be dispersed in any one or more of the surface layers 12a and 12b and the acoustic preventing layer 12c. Among them, they are preferably dispersed in at least one of the surface layers 12a and 12b, particularly preferably they are dispersed in both of the surface layers 12a and 12b.

The average particle diameter of the IR-shielding fine particles to be dispersed is preferably at most 0.2 µm. The material of the IR-shielding fine particles may be a metal such as Re, Hf, Nb, Sn, Ti, Si, Zn, Zr, Fe, Al, Cr, Co, Ce, In, Ni, Ag, Cu, Pt, Mn, Ta, W, V or Mo, their oxides, their nitrides, their sulfates, their silicic compounds, inorganic fine particles formed by doping Sb or F into them, or an organic IR absorber of e.g. phthalocyanine type. These fine particles may be used alone or as a mixture.

In the interlayer of the present invention, the thickness at the upper side is larger than the thickness at the lower side. Accordingly, in an interlayer in which IR-shielding fine particles are dispersed, more amount of IR-shielding ultrafine particles are present in the upper side portion. A passenger's head or face tends to sense heat and uncomfortable feeling due to sunlight entering into the cabin through a laminated glass. Accordingly, by employing an interlayer whose upper side portion includes more amount of IR-shielding fine particles, it is possible to obtain an effect of reducing such uncomfortable feeling around the head or face, to contribute to improve amenity in the cabin.

In this example, an example in which curved monolithic glass sheets are employed as the glass sheets 11, is described, but besides curved glass sheets, flat glass sheets may also be employed. Further, in terms of structure, normal single glass sheets, tempered glasses, wired glasses etc. may be employed. In terms of color, not only transparent glass sheets, but also glass sheets having various colors such as green, brown or blue to be used for vehicles, may be employed. Further, in terms of thickness, glass sheets having a thickness of from 1.5 to 2.5 mm can be employed.

In terms of material, not only glass sheets made of inorganic glass but also organic transparent resin glass sheets made of a resin such as polycarbonate, polystyrene or polymethacrylate, may also be employed. These organic transparent resin glass sheets may be each a lamination of a plurality of sheets made of any of the above resin.

Further, in this example, an example of interlayer in which surface layers and an acoustic preventing layer are laminated, is described, but the present invention is not limited thereto, and it is also applicable to a single layer interlayer made of a resin having functionality, or a multilayer interlayer constituted by layers having different hardnesses. The function to be imparted to the interlayer is not limited to acoustic preventing function, but various types of functions such as UV absorption, IR absorption, electromagnetic shielding, antiglare function, or selective transmittance, selective reflection or selective absorption of electromagnetic waves, may be imparted to the interlayer. Further, a layer having functionality in a multilayer interlayer, is not limited to a layer having low hardness or to a layer sandwiched between surface layers, but it may be a surface layer.

Further, an interlayer 12 may have still another layer on the outer surface of any of the surface layers or between a surface layer and a layer sandwiched by the surface layers (between the surface layer 12a and the acoustic preventing layer 12c or between the surface layer 12b and the acoustic preventing layer 12c in Fig. 6). By combining such still another layers having various functionalities, the interlayer of the present invention can be employed as a high-functional multilayer interlayer.

Then, using a laminated glass employing normal monolithic glass sheets and an interlayer of three-layer structure as an example, the process for producing a laminated glass of the present invention is described.

A glass sheet before it is bent into a curved shape is cut into a predetermined shape. The glass sheet cut into a predetermined shape may have an opaque layer (not shown) formed in a desired surface. Such an opaque layer may be formed by using a known material such as a colored ceramic paste, by using a known production method. A glass sheet coated with a colored ceramic paste, is preliminary dried, and thereafter, placed on a predetermined mold and bent into a desired shape by using e.g. a heating furnace and a cooling furnace, to be a curved shape. By heating in this process, the colored ceramic paste is baked to form an opaque layer.

The interlayer 12 is formed by laminating two surface layers and an acoustic preventing layer so that the surface layers sandwich the acoustic preventing layer, and extending them to a desired shape. Thereafter, the interlayer 12 is sandwiched by two glass sheets 11a and 11b. The glass sheets 11 sandwiching and the interlayer 12 are preliminary press-bonded, and processed in a autoclave to obtain a laminated glass 10.

The interlayer 12 having a three-layer structure may be produced by co-extruding a material for forming surface layers and a material for forming the acoustic preventing layer that is sandwiched between the materials forming surface layers. Besides these methods, the interlayer 12 of three-layer structure can be produced also by separately extruding a material for forming each layer to form the layer and laminating the layers in a desired lamination order and thermally press-bonding them. These surface layers and the acoustic preventing layer may contain an additive such as a plasticizer. As a specific production method, a production method disclosed in JP-A-2000-272936 is preferred.

According to JP-A-2000-272936, the acoustic preventing layer 12c can be produced in the following manner. 60 Parts of triethylene glycol-di-2-ethylbutyrate (3GH) as a plasticizer is added to 100 parts of PVB-c (degree of butyral: 60.2 mol%, amount of acetyl groups: 11.9 mol%) as a thermoplastic resin, they are sufficiently kneaded by a mixing roll, and pressmolded at 150°C for 30 minutes by using a press-molding machine to form a first layer of 0.4 mm thick. The surface layers 12a and 12b can be produced by adding 40 parts of 3GH as a plasticizer to 100 parts of polyvinyl butyral rein {PVB-a (degree of butyral: 65.9 mol%, amount of acetyl groups: 0.9 mol%)} as a thermoplastic resin sufficiently kneading them by a mixing roll, and press-molding them at 150°C for 30 minutes by using a press-molding machine to produce surface layers 12a and 12b of 0.2 mm thick.

The interlayer before it is extended is substantially rectangular, and by extending right and left sides to curve the upper side and the lower side to accommodate it to a window design, it is extended to have a shape accommodated to the shape of laminated glass when it is observed from front side. At this time, the thickness of the lower side of the interlayer at which the amount of extension is large, becomes thinner than the thickness at the upper side, whereby a wedge-shaped cross section is formed.

In the present invention, in e.g. an interlayer of three-layer structure, first resin layers on both sides sandwiching a second resin layer have higher hardness than that of the second resin layer. By making the hardness of the first resin layers higher than that of the second resin layer, it is possible to prevent the thickness in the lower side region in which the ratio of extension is large, from becoming too thin at a time of extending the multilayer interlayer of three-layer structure to have a wedge-shaped cross section.

Here, "the thickness of interlayer at the lower side region becomes too thin" means, for example, a case where the thickness becomes about less than 0.3 mm, whereby at a time of press-bonding glass sheets and the interlayer to form a laminated glass, degassing becomes insufficient and the press-bonding with glass sheets becomes insufficient to cause optical distortion. The degree of hardness of the first resin layers based on that of the second resin layer, is appropriately selected depending on press-bonding conditions at a time of producing a laminated glass and the thicknesses and types of resin layers forming the interlayer.

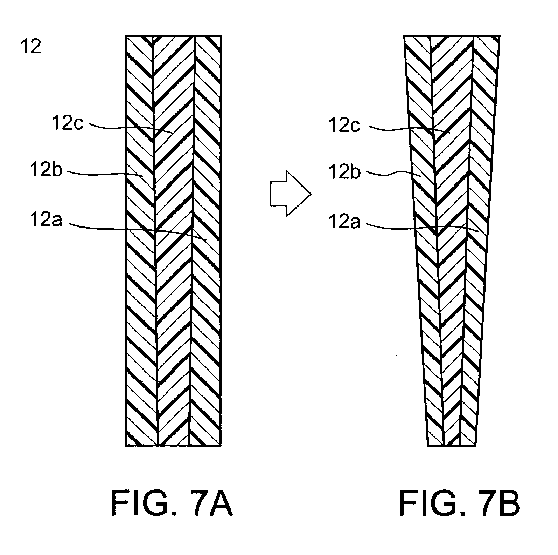

Figs. 7A and 7B are cross-sectional schematic views showing an example of an interlayer before and after extension. In the cross section of interlayer 12 before extension shown in Fig. 7A, the surface layers 12a and 12b and an acoustic preventing layer 12c each have substantially uniform thickness, and the thickness of acoustic preventing layer 12c is sufficient for changing the shape. By extending right and left sides of the interlayer, the laminated three layers are extended at the same time, whereby an interlayer having a wedge-shaped cross section in which each of the three layers has a wedge-shape, is formed as shown in Fig. 7B.

In this example, a method has been described in which an interlayer 12 having a wedge-shaped cross section is produced by extending an interlayer obtained by laminating surface layers and an acoustic preventing layer. However, the interlayer 12 may be obtained also by laminating surface layers each extended separately and an acoustic preventing layer extended separately. In this case, it is possible to form an interlayer having a wedge-shaped cross section by optionally combining a layer having a wedge-shaped cross section and a layer having a uniform cross section. Further, an interlayer 12 may be formed by further extending an interlayer already having a wedge-shaped cross section.

### INDUSTRIAL APPLICABILITY

The laminated glass for vehicles of the present invention can be suitably employed as an windshield for vehicles. In this document, an example of applying it to a windshield for automobiles, but the present invention is not limited thereto, and can be applied to other windows of vehicles such as automobiles, or windows of transportation vehicles such as airplanes or ships. Further, the present invention can be applied to various types of applications such as a high-functional glass such as an acoustic preventing glass or a glass for head up display that is required to have screen function, to the extent of not impairing the effect of the present invention.

The entire disclosure of Japanese Patent Application No. 2007-013803 filed on January 24, 2007 including specification, claims, drawings and summary is incorporated herein by reference in its entirety.

## Claims

1. A laminated glass for vehicles comprising two curved glass sheets and an interlayer made of resin provided between the two glass sheets, that are laminated together, wherein the interlayer made of resin comprises at least one resin layer having a functionality, and the thickness of the interlayer at the upper side is from 1.5 to 3 times of the thickness at the lower side, and the thickness of the interlayer at the upper side is at least 1.5 mm and the thickness at the lower side is at least 1 mm.

2. A laminated glass for vehicles comprising two curved glass sheets and an interlayer of multilayer structure made of resin provided between the two glass sheets, that are laminated together, wherein the interlayer comprises a plurality of first resin layers and a second resin layer having a hardness lower than those of the first resin layers, and the first resin layers and the second resin layer sandwiched between them constitute at least a three-layer structure, wherein the thickness of each of the first resin layers is at least 0.3 mm at the upper side and at least 0.3 mm in the entire region within 400 mm from the lower side, and wherein the thickness of the second resin layer at the upper side is from 1.5 to 3 times of the thickness at the lower side.

3. A laminated glass for vehicles comprising two curved glass sheets and an interlayer of multilayer structure made of resin provided between the two glass sheets, that are laminated together, wherein the interlayer comprises a plurality of first resin layers and a second resin layer having a hardness lower than those of the first resin layers, and the first resin layers and the second resin layer sandwiched between them constitute at least a three-layer structure, wherein the thickness of each of the first resin layers is at least 0.3 mm at the upper side and at least 0.3 mm in the entire region within 400 mm from the lower side, and wherein the thickness of the second resin layer is at least 0.15 mm at the upper side and at least 0.1 mm at the lower side.

4. The laminated glass for vehicles according to Claim 2 or 3, wherein the ratio between the total thickness of the plurality of first resin layers and the thickness of the second resin layer at the upper side is substantially equal to that at the lower side.

5. The laminated glass for vehicles according to any one of Claims 2 to 4, wherein at the upper side and the lower side, the thickness of the second resin layer is from 10 to 20% of the total thickness of layers constituting the interlayer.

6. The laminated glass for vehicles according to any one of Claims 2 to 5, wherein the thickness of the second resin layer is at least 0.15 mm in the entire region more than 500 mm from the lower side.

7. The laminated glass for vehicles according to any one of Claims 2 to 6, wherein the thickness of the second resin layer at the upper side is thicker than that at the lower side.

8. The laminated glass for vehicles according to any one of Claims 2 to 7, wherein the interlayer comprises two said first resin layers and the second resin layer having a hardness lower than those of the first resin layers, and the first resin layers and the second resin layer sandwiched between the first resin layers constitute a three-layer structure.

9. The laminated glass for vehicles according to any one of Claims 1 to 8, wherein the thickness of the interlayer simply decreases from the upper side towards the lower side.

10. The laminated glass for vehicles according to any one of Claims 2 to 9, wherein the thickness of at least one layer constituting the interlayer of multilayer structure simply decreases from the upper side towards the lower side.

11. The laminated glass for vehicles according to any one of Claims 1 to 10, wherein a strip-shaped shade function region is provided along the upper side of the interlayer.
